# EUROPÄISCHE PATENTSCHRIFT

(11) **EP 1 274 665 B1**
(45) Veröffentlichungstag und Bekanntmachung des Hinweises auf die Patenterteilung: **03.05.2006**
(21) Anmeldenummer: 01913789.2
(22) Anmeldetag: 08.02.2001
(51) Int. Cl.: C04B 35/10

(54) **MIKROKRISTALLINE ALPHA Al2O3 FORMKÖRPER, VERFAHREN ZU IHRER HERSTELLUNG SOWIE IHRE VERWENDUNG**
MICROCRYSTALLINE ALPHA Al2O3 SHAPED BODY, METHOD FOR THE PRODUCTION AND USE THEREOF
CORPS MOULES MICROCRISTALLINS A BASE DE ALPHA Al2O3, PROCEDE PERMETTANT DE LES PRODUIRE ET LEUR UTILISATION

(30) Priorität: 17.04.2000 DE 10019184
(43) Veröffentlichungstag der Anmeldung: 15.01.2003
(73) Patentinhaber: Treibacher Schleifmittel GmbH, 79725 Laufenburg (DE)
(72) Erfinder: MOELTGEN, Paul, 79725 Laufenburg (DE); PIRMIN, Wilhelm, 79725 Laufenburg (DE); Clemens, Frank J., CH-8500 Frauenfeld (CH)
(74) Vertreter: Neunert, Peter Andreas
(86) Internationale Anmeldenummer: PCT/EP2001/001336
(87) Internationale Veröffentlichungsnummer: WO 2001/079135

(56) Entgegenhaltungen:
- EP-A- 0 394 500
- EP-A- 0 394 501
- DE-A- 19 602 525
- DE-A- 19 618 129
- DE-A- 19 629 690

## Beschreibung

Die vorliegende Erfindung betrifft mikrokristalline α-Al₂O₃₋Formkörper gemäß dem Oberbegriff des Anspruchs 18, ein Verfahren zu ihrer Herstellung sowie ihre Verwendung als Schleifkörner für Schleifmittel.

Schleifkörner auf Basis von Al₂O₃ werden aufgrund ihrer hohen Härte, chemischen Inertheit und hohen Temperaturbeständigkeit industriell in großen Mengen zu Schleifmitteln verarbeitet. Dabei werden neben Schmelzkorund, der relativ kostengünstig im elektrischen Lichtbogenofen hergestellt werden kann und daher den mengenmäßig größten Anteil bei der Produktion von Schleifmitteln ausmacht, für bestimmte Einsatzgebiete sog. Sinterkorunde, die über einen keramischen oder chemischen Weg hergestellt werden, eingesetzt. Sinterkorunde, deren schleiftechnische Vorteile für bestimmte Schleifoperationen durch ihren mikrokristallinen Aufbau bedingt sind, sind bereits seit ca. 50 Jahren bekannt.

So werden in der US-A-3 909 991 polykristalline Al₂O₃-Körper beschrieben, deren Kristallitgröße im Submikron-Bereich liegt und deren Dichte über 95 % der theoretischen Dichte beträgt. Die Herstellung erfolgt durch Heißpressen aus einer Mischung aus Ruß und granulierten Al₂O₃-Kärpern, die nach der US-A-3 079 243 durch Zerkleinern kaltgepresster Al₂O₃₋Formkörper gewonnen werden. Das Verfahren ist relativ aufwendig und wenig geeignet für eine großtechnische Produktion.

In der EP-B-0 152 768 wird ein Schleifkorn beschrieben, das über die Sol-Gel-Technologie bei relativ niedrigen Sintertemperaturen hergestellt wird. Als Sinterhilfe werden dabei Kristallisationskeime zugesetzt, die den Sintervorgang beschleunigen und ein unkontrolliertes Kristallwachstum verhindern.

Die so hergestellten mikrokristallinen Schleifkörner besitzen eine Submikronstruktur und werden bevorzugt in keramisch gebundenen Schleifscheiben für den Präzisionsschliff eingesetzt. Ebenfalls über die Sol-Gel-Technik werden nach der EP-B-0 408 771 noch feiner strukturierte Korundschleifkörner mit einer mittleren Kristallitgröße von 0,2 µm erhalten.

Die EP-B-0 725 045 beschreibt ein Verfahren zur Herstellung gesinterter α-Al₂O₃-Körper, nach dem auch ohne den relativ aufwendigen Sol-Gel-Prozess über eine konventionelle keramische Technologie mikrokristalline Schleifkörner produziert werden können.

Alle oben genannten Verfahren beinhalten als Verfahrensschritt eine Zerkleinerung und Aufbereitung des Grün- oder Sinterkörpers zur Schleifkörnung, welcher mit konventionellen Methoden (Brecher, Walzenmühlen oder ähnlichem) durchgeführt wird. Bei dieser Art der Zerkleinerung erhält man in der Regel keine bevorzugte Kornform, sondern es liegt anschließend ein Kornband mit den unterschiedlichsten Kornformen und Korngrößen vor, wobei es lediglich möglich ist, durch geeignete Wahl der Zerkleinerungsaggregate bestimmte Kornformen und Korngrößen in beschränktem Umfang anzureichern.

Nun spielt jedoch nicht nur die Mikrostruktur, sondern auch die geometrische Form und die Größe des Schleifkorns selbst für den Schleifprozess eine entscheidende Rolle. So werden zum Beispiel für bestimmte Einsatzgebiete, bei denen keine allzu großen Kräfte auf das Schleifkorn wirken, aggressive, scharfkantige und splitterförmige Schleifkörner bevorzugt, während sich für andere Einsatzbereiche, bei denen beispielsweise das Schleifkorn hohen Drücken ausgesetzt ist, kompakte, kubische Körner bewährt haben. Die Kornform selbst kann bei der üblichen Aufbereitung durch Backenbrecher, Walzen und Mühlen jedoch nur in einem bestimmten, begrenzten Ausmaß beeinflusst werden und die Ausbeute an Korn mit einer bestimmten Kornform in einer definierten Korngröße ist im Verhältnis zum gesamten Kornanfall in der Regel relativ gering. Andererseits wird für das Schleifen selbst häufig eine genau definierte Kornform und Korngröße gefordert, um eine bestimmte Abtragsleistung und Oberflächenqualität zu gewährleisten. Da die Kornverteilung in dem Kornband sich jedoch nur in einem beschränkten Ausmaß mit den für das Schleifen tatsächlich geforderten Korngrößen und -formen deckt, sind aufwendige Nachbearbeitungen oder zusätzliche vermahlungen notwendig, um den tatsächlichen Bedarf zu decken. Dies führt dazu, dass bei der Aufbereitung und Klassierung von Schleifkörnungen stets ein relativ großer Anteil an "Abfall", d.h. Schleifkorn, das nicht mehr für die Produktion von Schleifmitteln eingesetzt werden kann, anfällt. Die Entwicklungsarbeiten auf dem Gebiet der Schleifkörnungen in den letzten Jahren zielten daher nicht nur auf Qualitätsverbesserung und Leistungssteigerung, sondern auch auf eine definierte Herstellung von Schleifkörnung mit einer bestimmten Kornform und Korngröße.

So wird beispielsweise in der US-A-3 387 957 ein mikrokristallines Schleifkorn auf Basis von Bauxit beschrieben, das die Form eines Stäbchens besitzt und durch Extrudieren einer Mischung aus feingemahlenem Bauxit, einer Flüssigkeit, bei der es sich bevorzugt um Wasser handelt, und einem Binder hergestellt wird. Hier ist es nicht nur gelungen, gezielt eine definierte Körnung zu produzieren, sondern es hat sich auch herausgestellt, dass die produzierten Stäbchen, als bevorzugte geometrische Form für bestimmte Schleifoperationen, wie Schruppschleifen, besonders gute Schleifergebnisse zeigten. Die Schleifleistung dieses Materials wird allerdings möglicherweise dadurch negativ beeinflusst, dass es nur zu ca. 85 - 88 Gew.-% aus Aluminiumoxid besteht, während die anderen Bestandteile, wie Fe₂O₃, SiO₂, TiO₂, CaO und MgO, nicht die notwendigen physikalischen Eigenschaften besitzen, um schleiftechnisch wirksam zu werden. Der Gehalt an α-Al₂O₃ wird sogar noch dadurch gemindert, dass sich aus Aluminiumoxid und SiO₂ unter den vorgegebenen Sinterbedingungen Mullit (3 Al₂O₃ x 2 SiO₂) bildet, das eine deutlich niedrigere Härte als Korund aufweist. Ein Schleifkorn auf Korundbasis mit derartigen Einschlüssen ist daher wenig für die Bearbeitung von Werkstoffen, wie gehärteter Stahl, Chromstahl, Gusseisen oder ähnlichen Materialien, die hohe Anforderungen an die Leistungsfähigkeit des Schleifkorns stellen, geeignet.

In der US-A-4 252 544 wird ein Schleifkorn beschrieben, das eine Dichte von mehr als 3.75 g/cm³ (≥ 90 % des theoretischen Werts) und eine Knoop-Härte von mehr als 1.900 kg/mm² besitzt, zu über 98 % aus Aluminiumoxid besteht und dessen Gefüge aus einer Mischung aus groben Kristallen in einem Bereich von 3 - 10 µm und feinen Kristallen, deren mittlere Partikelgröße unter 2 µm liegt, aufgebaut ist. Das Schleifkorn wird durch Mischen von, bevorzugt 20 bis 50. Gew.-%, Elektrokorund mit einer Teilchengröße von 3 bis 10 µm und einer kalzinierten Bayer-Tonerde (bevorzugt 80 bis 50 %), deren Teilchengröße zwischen 0,2 und 1 µm liegt, Versetzen und Kneten der Mischung mit Wasser und einem Binder, Extrudieren der Mischung und anschließendes Sintern des zerkleinerten Extrudats hergestellt. Die Sintertemperaturen liegen bei 1550 °C bis 1650 °C.

Ein solches Material weist damit zwar deutlich günstigere Schleifeigenschaften als die vorher beschriebenen Stoffe auf Bauxitbasis auf, seine Struktur ist aber im Vergleich zu den vorher genannten submikronen Korunden, die beispielsweise über die Sol-Gel-Technologie gewonnen werden, immer noch deutlich gröber und seine Dichte ist wesentlich geringer, so dass ein Material nach der US-A-4 252 544 weniger zäh und fest ist als die Materialien auf Sol-Gel-Basis mit einer Submikron-Struktur.

Die Zähigkeit und Festigkeit eines Schleifkorns hat unterschiedliche Auswirkungen auf den Schleifprozess. Einerseits wird eine hohe Zähigkeit und Festigkeit benötigt, damit das Schleifkorn beim Schleifen nicht zu schnell verschleißt, andererseits jedoch werden für einen effizienten Schleifprozess scharfe Schneidkanten benötigt. Scharfe Schneidkanten können zum einen dadurch entstehen, dass das abgenutzte und abgerundete Korn aus der Bindung herausbricht und somit frische Körner mit scharfen Kanten aus einer darunterliegenden Schicht zum Einsatz kommen, oder dass - im günstigeren Fall - kleinere Bereiche aufgrund der Kräfte, die beim Schleifprozess auf das Schleifkorn wirken, aus dem Schleifkorn selber herausbrechen und somit auch frische Schneidkanten gebildet werden, ohne dass das Korn verlorengeht. Je zäher und fester ein Schleifkorn ist, um so größer ist auch sein Leistungspotential, was jedoch nur dann auch genutzt werden kann, wenn es gelingt, die oben beschriebene Selbstschärfung des Schleifkorns zu gewährleisten. Für diesen Fall müssen die Kräfte, die auf das Korn wirken, groß genug sein, um ein Nachschärfen zu erreichen, gleichzeitig sollte nach Möglichkeit ein Ausbruch des Korns vermieden werden. Je höher die Kräfte jedoch sind, die auf das einzelne Schleifkorn wirken bzw. wirken müssen, um einen Nachschärfeffekt zu erreichen, um so besser und fester muss das Korn auch im Schleifmittel eingebunden sein.

Eine Anwendung, bei der das Schleifkorn hohen Drücken ausgesetzt ist, ist zum Beispiel das Schruppschleifen oder Grobschleifen von Brammen und Knüppeln im Gießereibetrieb oder in Stahlwerken, bei der häufig Sinterkorunde in sogenannten heißgepressten Scheiben eingesetzt werden. Als Basis für die Bindung des Korns dient Kunstharz. Die Scheiben selber sind hochverdichtet und nahezu porenlos.

Betrachtet man generell den Verschleißmechanismus eines konventionellen, grobkristallinen Schleifkorns während des Schleifens, so erkennt man, dass sich das Korn zunächst abnutzt, wobei es immer stumpfer wird, um schließlich ganz aus der Bindung herauszubrechen. Die mikrokristallin aufgebauten Korunde haben nun den Vorteil, dass, nachdem die Primärkanten verschlissen und abgerundet sind, kleinere Bereiche aus dem Korn selbst ausbrechen können und somit neue Schneidkanten gebildet werden, die wieder in den Schleifprozess eingreifen. Dieser Vorgang wiederholt sich und das Schleifkorn selbst bricht wesentlich später aus der Bindung heraus. Mit anderen Worten, die Schleifscheibe verschleißt weniger schnell und zeigt damit eine größere Abtragsleistung. Je feinkristalliner und dichter ein Sinterkorund aufgebaut ist, um so zäher ist das Material und um so kleiner sind die Bereiche, die aus dem Korn herausbrechen. Das bedeutet, dass die oben geschilderte Selbstschärfung sich bei vorgegebener Korngröße häufiger wiederholen kann, die Schneidkanten selber zusätzlich länger im Einsatz sind und somit rein theoretisch eine entsprechend höhere Abtragsleistung erzielt werden sollte. Die Grundvoraussetzung für ein sinnvolles Funktionieren einer effizienten Nachschärfung ist natürlich, dass das Korn auch eine erforderliche Grundfestigkeit besitzt, die einen zu schnellen Ab-trag und ein Verschleißen des Korns verhindert.

Gerade beim oben erwähnten Schleifen mit heißgepressten Scheiben macht sich nun aber ein gegenläufiger Effekt bemerkbar, der sich negativ auf die Schleifleistung auswirkt. Will man nämlich jetzt die Schleifleistung und Standzeit einer Scheibe dadurch steigern, dass man immer feiner strukturierte und dichtere Kornmaterialien einsetzt, so stellt man fest, dass ab einer bestimmten Zähigkeit des Materials, die wiederum von der Dichte und Kristallstruktur abhängt, die Kräfte, die notwendig sind, um ein Nachschärfen zu verwirklichen, die Bindungskräfte übersteigen, so dass das Korn wie üblich stumpfer wird, aber nicht mehr nachschärft, sondern plötzlich aus der Bindung herausbricht. Die Abtragsleistung und Standzeit einer solchen Scheibe mit einem vermeintlich "besseren" Schleifkorn kann somit wesentlich geringer ausfallen als die einer Scheibe mit einem Schleifkorn, das eine geringere Dichte und gröbere Struktur aufweist.

Will man das höhere Leistungspotential des Schleifkornes dennoch nutzen, geht man üblicherweise daran, die Einbindung des Korns zu verbessern. Je mehr Widerstand die Bindung dem Ausbrechen des Schleifkorns aus dem Verbund entgegensetzt, um so härter wirkt die Scheibe. Der Härtegrad einer Schleifscheibe läßt sich jedoch nur in einem gewissen Ausmaß steigern und vor allem beim Einsatz von Kunstharz als Basis für die Bindung reicht das Optimierungspotential für die Einbindung häufig nicht aus, um ein mikrokristallines, bevorzugt submikrones, dichtes Korn so fest zu binden, dass es sein Leistungspotential, das aufgrund seines Gefüges rein theoretisch vorhanden sein sollte, voll zur Geltung bringen kann.

Teilweise gelingt es, das Problem dadurch zu lösen, dass man den Sinterkorund nicht pur, sondern als Mischung mit konventionellem Schmelzkorund einsetzt. Diese Vorgehensweise hat sich vor allem bei den oben genannten Sol-Gel-Korunden bewährt, die üblicherweise sowohl in Schleifmitteln auf Unterlage als auch in Schleifscheiben als Gemisch mit konventionellen Korundsorten eingesetzt werden. Vereinfacht ausgedrückt, sorgt in einer solchen Kombination der konventionelle Korund für die nötige Schnittigkeit, während der Sinterkorund für die Standzeit und Abtragsleistung verantwortlich ist.

Die EP-B-0 395 091 beschreibt gesinterte, faserförmige Sol-Gel-Schleifkörner, deren Kristallitgröße bevorzugt unter 1 µm liegt und die durch Extrudieren eines Böhmit-Gels, das bevorzugt einen Feststoffgehalt von 45 - 64 Gew.-% besitzt, hergestellt werden. Ähnlich wie bei den zuvor beschriebenen stäbchenförmigen Korunden gelingt es so auch für submikrone Sol-Gel-Korunde, gezielt die Ausbeute an verkaufsfähiger Körnung drastisch zu erhöhen. Darüber hinaus zeigt das Material aufgrund seiner Kornform bei bestimmten Schleifoperationen sogar bessere Abtragsleistungen als ein vergleichbarer Sol-Gel-Korund, der über konventionelle Verfahren zerkleinert wurde und keine Vorzugsform aufweist.

Wenn man jedoch die Leistungsfähigkeit und den Nutzen eines bestimmten Schleifkorns bewerten will, ist es im Prinzip unumgänglich, auch das Einsatzgebiet für das Schleifkorn zu definieren, da an ein Schleifkorn je nach Einsatzgebiet die unterschiedlichsten Anforderungen, die u.a. beispielsweise davon abhängen, welcher Werkstoff mit welchen Ziel (Oberflächengüte, Abtrag usw.) bearbeitet werden soll, gestellt werden. In der Praxis werden als Werkstoffe nahezu sämtliche Stahlsorten, Metalle, Legierungen, die unterschiedlichsten Holzarten, Gestein, Glas, Kunststoffe, Lacke und viele mehr schleiftechnisch bearbeitet. Obwohl man bemüht ist, ein Schleifkorn, das die für den Schleifprozess relevanten Eigenschaften, wie hohe Härte, Zähigkeit, chemische und thermische Beständigkeit u. v. a. m. besitzt, möglichst universell einzusetzen, ergeben sich jedoch immer wieder Verschiebungen in der Bewertung der einzelnen Schleifkornsorten untereinander, da je nach Einsatzgebiet bestimmte Eigenschaften eines Korns wie z.B. Zähigkeit, Härte, Sprödigkeit, thermische Beständigkeit und/oder chemische Beständigkeit im Vordergrund stehen. Hinzu kommt der ökonomische Aspekt. So macht es z.B. wenig Sinn, ein Material, das relativ leicht zu bearbeiten ist, mit besonders teuren Materialien, die ein hohes Leistungspotential besitzen, zu bearbeiten, wenn deren Leistungsstärke in dem speziellen Fall überhaupt nicht zum Tragen kommt und ein wesentlich preisgünstigeres Korn ein ähnliches Schleifresultat zeigt.

So sprechen z.B., trotz des möglicherweise sehr hohen allgemeinen Leistungspotentials, mehrere Gründe gegen den Einsatz von faserförmigen, mikrokristallinen Korunden nach der EP-B-0 395 091 in heißgepressten Scheiben. Das in der EP-B-0 395 091 beschriebene Schleifkorn besitzt ein außerordentlich feines Gefüge und ist sehr dicht, so dass ein Nachschärfen außerordentlich hohe Kräfte erfordert, die durch eine Bindungsanpassung unter Umständen nicht mehr ausgeglichen werden können, so dass man von einem relativ hohen Verschleiß der Scheibe durch ausbrechendes Korn ausgehen muss. Hinzu kommt, dass sein Einsatz für das Grobschleifen, bei dem die bekannten, relativ preiswerten Sinterkorunde schon gute Abtragsleistungen zeigen, aus ökonomischen Gründen überhaupt in Frage gestellt werden muss, da ein Schleifkorn nach der EP-B-0 395 091 aufgrund des teuren Rohstoffes und aufwendigen Sol-Gel-Verfahrens in den Herstellungskosten deutlich über den konventionellen Sinterkorunden liegt, auch wenn es gelungen sein sollte, die Ausbeute an Nennkorn aufgrund der Prozessführung deutlich zu erhöhen.

Der Erfindung lag daher die Aufgabe zu Grunde, ein verbessertes Schleifkorn für eine Reihe von Schleifoperationen, für die das oben genannte Grobschleifen mit heißgepressten Scheiben angesichts seines hohen Marktvolumens lediglich als Beispiel genannt wurde, zur Verfügung zu stellen, das aufgrund seiner Mikrostruktur und Dichte ein hohes Leistungspotential und aufgrund seiner Kornform und/oder Oberfläche eine hohe Bindungsfestigkeit aufweist und gleichzeitig kostengünstig produziert werden kann. Dies betrifft nicht nur den Bereich der gebundenen Schleifmittel, sondern gilt auch für den Bereich der Schleifmittel auf Unterlage.

Erfindungsgemäß gelöst wird diese Aufgabe durch die Bereitstellung eines Schleifkorns gemäß den Merkmalen des Anspruchs 18, eines Verfahrens zu seiner Herstellung mit den Merkmalen des Anspruchs 1 und seiner zweckmäßigen Verwendung gemäß den Merkmalen des Anspruchs 25. Vorteilhafte Ausgestaltungen der Erfindung sind in den Unteransprüchen angegeben.

Das erfindungsgemäße Verfahren umfasst die wesentlichen Verfahrensschritte
a) Pulveraufbereitung,
b) Herstellung einer extrudierbaren keramischen Masse,
c) Extrusion der Masse,
d) Zerkleinern oder Ablängen und
e) Sintern,
die im folgenden ausführlicher beschrieben werden.

Für die Bereitstellung eines α-Al₂O₃-Pulvers mit einer mittleren Teilchengröße < 2 µm kommt als Ausgangsstoff prinzipiell jedes α-Al₂O₃ bzw. jeder Vorstoff für α-Al₂O₃ in Frage.

Bevorzugt werden dazu allerdings kommerziell erhältliche α-Al₂O₃-Pulver eingesetzt, deren mittlere Partikelgröße zwischen 1 und 10 µm liegt, die dann über eine Nassvermahlung zu einem Schlicker mit einer mittleren Partikelgröße < 2 µm verarbeitet werden. Bei der Auswahl des Ausgangsmaterials stehen nicht zuletzt auch Kostenüberlegungen im Vordergrund. Die oben genannten Materialien sind relativ kostengünstig auf dem Markt erhältlich und können mit einem vertretbaren Energieaufwand zu der angestrebten Produktfeinheit vermahlen werden. Aus technischer Sicht spricht jedoch nichts dagegen, beliebig feinere oder gröbere Materialien einzusetzen, die dann entsprechend teurer sind bzw. mehr Energieaufwand für die Aufbereitung erfordern. Denkbar ist es natürlich auch, dass Pulver eingesetzt werden, deren Partikelgröße in einem Bereich liegt, dass sie ohne zusätzliche Vermahlung direkt eingesetzt werden können.

Bei der Auswahl des Ausgangsmaterials ist zu berücksichtigen, dass die Produkteigenschaften wesentlich von dem Feinheitsgrad des Ausgangsmaterials abhängen. Somit ist es vorteilhaft, α-Al₂O₃-Pulver mit einer Teilchengröße d₉₉ ≤ 1 µm einzusetzen, wenn man Produkte mit einem besonders feinen Kristallitgefüge erhalten will.

Als Mahlaggregate kommen Vibrationsmühlen, Attritoren oder Kugelmühlen in Frage. Die Mahldauer hängt vom eingesetzten Ausgangsstoff und dem verwendeten Mühlentyp ab. Um in den angestrebten Feinheitsbereich vorzudringen, ist es aus technischer Sicht sinnvoll, eine Nassvermahlung vorzunehmen. Erfindungsgemäß kann jedoch auch jedes andere Verfahren, das α-Al₂O₃ in der gewünschten Produktfeinheit liefert, eingesetzt werden. Der bei der Nassvermahlung anfallende Schlicker wird anschließend getrocknet, wozu sich alle in der Technik bekannten Trockenverfahren eignen. Aus wirtschaftlichen Gründen kann vorzugsweise ein Sprühtrockner eingesetzt werden. Das so erhaltene Pulver wird anschließend mit einem Lösungsmittel und einem Binder zu einer extrudierbaren Masse vermischt bzw. geknetet. Zusätzlich können je nach Bedarf Dispergierhilfen, Gleitmittel und Weichmacher in der Mischung eingesetzt werden, was nicht zuletzt auch davon abhängt, welchen Typ von Extruder man für die Formgebung einsetzen will. Auch ist es möglich, vor dem Extrudieren, vorzugsweise jedoch schon bei der Nassvermahlung, Sinteradditive (Sinterhilfen, Kristallwachstumsinhibitoren etc.) zuzusetzen, mit denen man das Gefüge im Schleifkorn zusätzlich beeinflussen kann. Geeignete Sinteradditive sind beispielsweise die Oxide der Elemente Mg, Co, Ni, Zn, Hf, Ti, Ce, Zr, Cu, Li, Sr, Ba, K, Nb, Si, B und/oder Seltene Erden.

Als Binder kommen sämtliche Binder, die üblicherweise für keramische Massen eingesetzt werden, in Frage, wie zum Beispiel Methylcellulose, Polyvinylbutyrale, emulgierte Acrylate, Polyvinylalkohole, Polyvinylpyrrolidone, Polyacrylate, Stärke, silikatische Binder und Ligninsulfonate. Als Lösungsmittel wird bevorzugt Wasser eingesetzt. Es können aber auch je nach Bedarf die üblichen anorganischen und organischen Lösungsmittel, wie zum Beispiel Alkohole, Ketone, Aromaten und Kohlenwasserstoffe, eingesetzt werden. Als Dispergierhilfen werden beispielsweise Polyacrylate, Silikate, Manhattan Fischöl, Polyäthylenimin, Ligninsulfonate und Alginate eingesetzt. Zu den gebräuchlichen Gleitmitteln, die in der Mischung für das erfindungsgemäße Schleifkorn eingesetzt werden können, gehören zum Beispiel Ammoniumstearate, Wachs-Emulsionen, Ölsäure, Manhattan Fischöl, Stearinsäure, Wachs, Palmitinsäure, Linolsäure, Linolensäure, Myristinsäure und Laurinsäure. Als Weichmacher schließlich können beispielsweise Polyäthylenglykol, Octylphtalate und Äthylenglykol eingesetzt werden.

Die Überschneidungen zwischen den einzelnen Verbindungsgruppen zeigen, dass einige der oben aufgeführten Substanzen multifunktionelle Wirkungsweisen besitzen bzw. besitzen können. Sämtliche der oben aufgeführten Substanzen und Verbindungen sind lediglich als Beispiele gedacht, ohne dass darin eine Einschränkung zu sehen ist. Erfindungsgemäß kann jede Verbindung mit einer entsprechenden, für die Formgebung nützlichen Wirkungsweise eingesetzt werden.

Generell wurde gefunden, dass mit den unterschiedlichsten Zusammensetzungen der Masse befriedigende Produktqualitäten erzielt werden können, wenn das Herstellverfahren der Konsistenz und Zusammensetzung der Masse angepasst wird und die passenden Aggregate verwendet werden.

Ziel des Mischvorganges ist es, eine möglichst homogene Masse zu erhalten. Dabei können für die Homogenisierung sämtliche in der keramischen Technologie gebräuchlichen Kneter oder Mischer eingesetzt werden. Die Extrusion selber kann in einem beliebigen Kolben, der hydraulisch verdichtet werden kann und mit einer vorgesetzten Lochblende (Mundstück) versehen ist, durchgeführt werden. Vorteilhaft werden jedoch Kneter mit Austragsschnecke, Einschneckenextruder, Compounder, Expansionsextruder, Doppelschneckenextruder, Planetenextruder und/oder Kolbenpressen eingesetzt. Die Arbeitsbedingungen selber unterscheiden sich nicht von denen für eine Extrusion üblichen Bedingungen und hängen im wesentlichen von der Wahl des Extruders und der Konsistenz der eingesetzten Masse ab. Generell wurde gefunden, dass die Produktqualität relativ unabhängig vom gewählten Extrusionsverfahren ist und nach entsprechender Anpassung der Masse und der Extrusionsbedingungen jedes der oben genannten Verfahren beliebig eingesetzt werden kann.

Vorteilhaft ist es, besonders dann, wenn man sehr dichte Produkte erhalten will, vor der Extrusion zu entgasen. Das kann vorteilhaft beispielsweise dadurch geschehen, dass man bereits das Mischen oder Kneten der Masse unter Vakuum durchführt, oder die Extrusion selber in einem Aggregat vornimmt, das mit einer Entlüftungseinheit versehen ist. Hierzu eignen sich besonders Schneckenextruder oder Kolbenpressen mit Entlüftungseinheiten, die es ermöglichen, die Masse vor der Extrusion zu entgasen, und damit die Ausbildung von Poren im Produkt aufgrund von Lufteinschlüssen in der Masse zu verhindern.

Die Ablängung bzw. Zerkleinerung der Extrudate kann direkt nach der Extrusion, z. B. durch eine Granuliereinheit mit rotierenden Messern, oder nach einem Zwischenschritt, bei dem der extrudierte Grünkörper zunächst auf einen Feuchtigkeitsgehalt von < 20 Gew.-%, bezogen auf die eingesetzte Menge an Aluminiumoxid, getrocknet wird, erfolgen. Für den Trocknungsschritt selber müssen keine besonderen Anforderungen berücksichtigt werden und es können die in der keramischen Industrie üblichen Trocknungsaggregate eingesetzt werden. Aus verfahrenstechnischer Sicht ist der Einsatz eines Bandtrockners oder eines Mikrowellentrockners besonders vorteilhaft. Als Granuliereinheit können nach dem Trocknen Schnellschneidemaschinen, wie Quer-, Strang- oder Längstschneider, eingesetzt werden. Es ist jedoch prinzipiell auch möglich, konventionelle Zerkleinerungsaggregate, wie Schneidmühlen, Schlägermühlen und Walzen für die Zerkleinerung der Extrudate einzusetzen, wobei allerdings zu bedenken ist, dass es dann besonders bei komplizierteren Formen leicht zu relativ hohen Ausbeuteverlusten kommen kann.

Die Wahl des Durchmessers, der Form und Länge der Extrudate hängt wesentlich von dem gewünschten Einsatzgebiet für das resultierende Schleifkorn ab. So werden beispielsweise für den Einsatz in Schleifscheiben bevorzugt Formkörper mit einem Verhältnis von Durchmesser zur Länge ≤ 1, während für Schleifmittel auf Unterlage Formkörper mit einem Durchmesser/Längen-Verhältnis von ≥ 1 bevorzugt werden. Auch die Oberfläche des Formkörpers richtet sich im wesentlichen nach dem vorgesehenen Einsatzgebiet. Während für Einsatzgebiete, bei denen das Korn relativ geringen Anpressdrücken ausgesetzt wird, problemlos glatte, stäbchenförmige Vollkörper eingesetzt werden können, sollte für Anwendungen mit höheren Anpressdrücken die Haftung in der Bindung durch eine Vergrößerung der Oberfläche des Formkörpers verbessert werden. Je nach Verwendungszweck des Formkörpers kommen dafür die unterschiedlichsten Möglichkeiten in Frage. In einem einfachen Fall erreicht man eine Vergrößerung der Oberfläche dadurch, dass man den Formkörper einer Oberflächenbehandlung unterzieht, wobei man beispielsweise die Oberfläche durch Aufbringen von feinsten Partikeln, z.B. Pigmenten, vergrößert und damit dem Binder mehr Fläche anbietet, um die Haftung des Korns im Schleifmittel zu bewirken. Diese Ummantelung des Korns ist eine bekannte und seit Jahren praktizierte Methode zur Verbesserung der Einbindung eines Schleifkorns. Prinzipiell können für den erfindungsgemäßen Formkörper sämtliche in der Literatur beschriebenen und bekannten Verfahren zur Oberflächenbehandlung eingesetzt werden. Als Binder werden dabei bevorzugt silikatische Binder oder Phosphate eingesetzt; es können aber auch organische oder andere anorganische Binder verwendet werden. Als feinstkörnige Materialien zur eigentlichen Vergrößerung der Oberfläche werden häufig anorganische Pigmente eingesetzt, wobei man aufgrund ihrer Verfügbarkeit, Feinheit und günstigen Kosten häufig Eisenoxid-Pigmente verwendet. Zusätzlich zu den Pigmenten bzw. den Feinstpartikeln können in die Ummantelung sogenannte schleifaktive Stoffe, wie z.B. Halogenide oder Chalkogenide, eingebaut werden, die den Schleifprozess beispielsweise durch chemische Reaktionen günstig beeinflussen können.

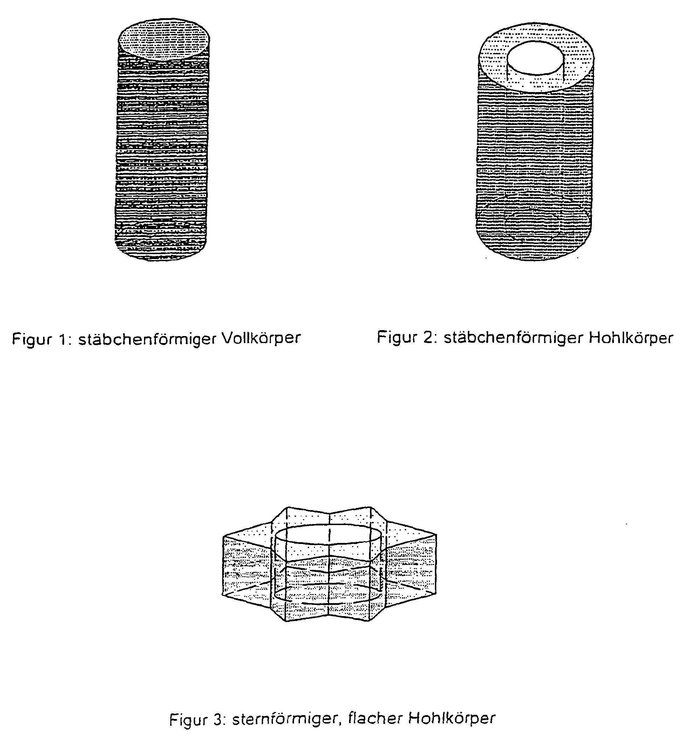

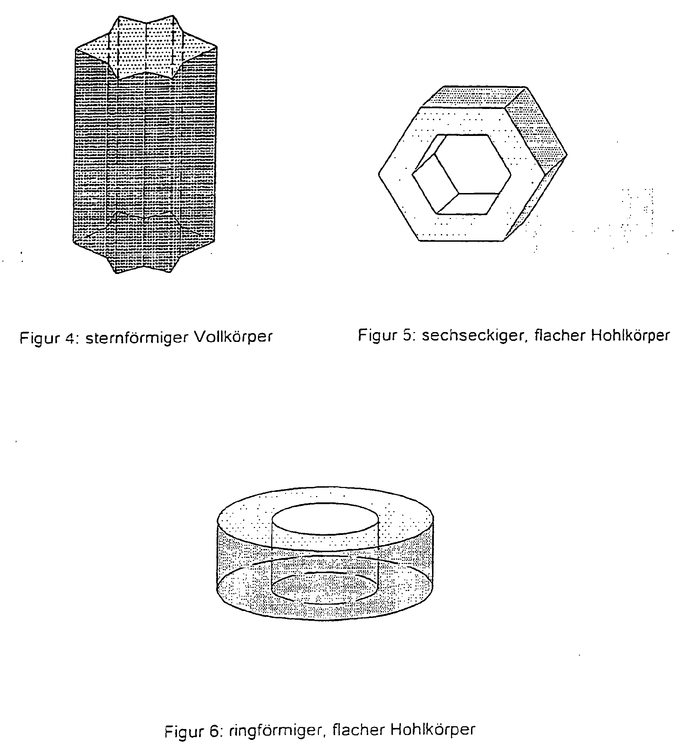

Für viele Schleifoperationen reicht jedoch eine einfache Ummantelung nicht aus, um die Einbindung so weit zu verbessern, dass das Schleifkorn auch bei hoher Beanspruchung noch in der Bindung hält. Es wurde gefunden, dass es für solche Fälle vorteilhaft ist, die Form des gesinterten Formkörpers so auszuwählen, dass eine größere Oberfläche und damit ein besserer Halt in der Bindung vorhanden ist. Die Figuren 1 bis 7 zeigen einige Beispiele für solche Formkörper mit größerer Oberfläche, ohne dass in dieser Auswahl eine Einschränkung zu sehen ist. Erfindungsgemäß kommen sämtliche großtechnisch herstellbaren Formen in Frage. Als besonders vorteilhaft haben sich sowohl für Schleifmittel auf Unterlage als auch für Schleifscheiben Hohlkörper erwiesen, wie sie beispielsweise die in den Figuren 2, 3, 5 und 6 gezeigt werden. Bei der Einbindung im Schleifmittel wird vorzugsweise der gesamte Hohlraum mit dem Bindemittel gefüllt, so dass nach dem Aushärten des Binders der Formkörper im Schleifmittel regelrecht verankert ist. Die Wandstärke, der Durchmesser und die Länge der Hohlkörper sowie die Verhältnisse der Abmessungen untereinander hängen sehr stark vom angestrebten Einsatz ab. Da der erfindungsgemäße Formkörper als Schleifkorn eingesetzt werden soll, liegen die Abmessungen auch im Bereich der üblichen Schleifkörnungen. D.h. der maximale Durchmesser für einen Vollkörper liegt bei ca. 6 mm und für einen Hohlkörper bei ca. 12 mm, wobei das Verhältnis Wandstärke zu Durchmesser bei einem Hohlkörper zwischen 0.1 / 1 und 0.4 / 1, vorzugsweise zwischen 0.2 / 1 und 0.3 / 1, liegt. Das Verhältnis Länge /Durchmesser variiert je nach Einsatzgebiet zwischen 0.1 / 1 und 20 / 1. So werden beispielsweise für Schleifmittel auf Unterlage überwiegend Formkörper mit einem Verhältnis Länge /Durchmesser ≤ 1, bevorzugt zwischen 0.2 / 1 und 1 / 1, eingesetzt, da es - im Vergleich zu einem länglichen, stäbchenförmigen Körper - wesentlich einfacher ist, ein flaches Schleifkorn gleichmäßig gerichtet auf einer Unterlage zu plazieren. Diese Überlegungen spielen wiederum für gebundene Schleifmittel keine Rolle; hier werden überwiegend Formkörper mit einem Längen/Durchmesser-Verhältnis ≥ 1, bevorzugt zwischen 1 / 1 und 10 / 1, verwendet. Die Vorteile für die länglichen Formkörper sind dabei auch verfahrenstechnisch begründet, da es wesentlich einfacher ist, einen bei einer Extrusion erhaltenen Strang in längliche Formen aufzuteilen oder zu zerkleinern. Hinzu kommt, dass besonders bei länglichen Hohlkörpern eine hervorragende Verankerung der betreffenden Schleifkörner im Bindemittel möglich ist.

Normalerweise können die bei der Extrusion anfallenden Stränge direkt im gewünschten Verhältnis geschnitten oder aufbereitet werden, ohne dass ein zusätzlicher Trocknungsschritt notwendig ist. Sollte jedoch der Feuchtigkeitsgehalt der Masse über 20 Gew.-% liegen, ist ein Trocknungsschritt vor der Weiterverarbeitung zu empfehlen. Aus wirtschaftlichen und verfahrenstechnischen Gründen liegt der bevorzugte Bereich für die Restfeuchte unter 10 Gew.-%. Es ist allerdings auch durchaus möglich, Massen mit einem höheren Feuchtigkeitsgehalt als 20 Gew.-% direkt zu verarbeiten.

In besonderen Fällen, allerdings nur dann wenn es sich um einfache Geometrien handelt, ist auch eine Zerkleinerung oder Aufbereitung nach der Kalzinierung oder Sinterung möglich.

Die Sinterung erfolgt üblicherweise direkt nach dem Aufbereitungsschritt bei Temperaturen zwischen 1300 und 1750 °C. Für die Sinterung kommen alle bekannten Ofentypen in Frage, die üblicherweise zum Brennen von keramischen Materialien eingesetzt werden und den Bereich zwischen 1300 °C und 1750 °C abdecken. In bestimmten Fällen, besonders bei komplizierteren Formen, kann es vorteilhaft sein, vor der Sinterung einen Kalzinierschritt durchzuführen, um den Binder und restliches Lösungsmittel zu entfernen. Üblicherweise wird die Kalzinierung in einem Temperaturbereich zwischen 150° und 800°C durchgeführt. Auch für diesen Schritt kommen sämtliche bekannten Ofentypen, die in der keramischen Industrie eingesetzt werden, in Frage.

Die Wahl der Sintertemperatur, der Sinterzeit und möglicher Sinterprogramme hängt davon ab, welche Eigenschaften das gewünschte Produkt haben soll, und ist in einem weiten Bereich variabel. Bei der Auswahl der Bedingungen spielen neben der Produktqualität auch wirtschaftliche Überlegungen eine Rolle. Durch eine entsprechende Wahl der Sintertemperatur und -zeit lassen sich die Produkteigenschaften wie Härte, Dichte und Primärkristallgröße gezielt beeinflussen. Diese Überlegung spielt vor allem bei Schleifoperationen sowohl im Bereich der Schleifmittel auf Unterlage als auch bei den gebundenen Schleifmitteln eine Rolle, bei denen keine so extrem hohen Drücke eingesetzt werden und ein Nachschärfen des Schleifkorns schon unter "milderen" Bedingungen erfolgen soll. Für diesen Einsatz bietet es sich an, niedrigere Sintertemperaturen zu wählen, so dass bei der Sinterung keine vollständige Verdichtung erfolgt und das Material zwar schon eine relativ hohe Härte von ≥15 GPa und eine Dichte, die bevorzugt über 95 % der Theorie liegt, aufweist, aber damit doch noch deutlich unter den für viele Anwendungen angestrebten möglichst hohen Härte- und Dichtewerten von ca. 20 GPa und > 98 % der theoretischen Dichte. Diese hohen Werte können jedoch problemlos durch die Wahl einer entsprechend höheren Temperatur erreicht werden, ohne dass es dabei zu einem unerwünschten Kristallwachstum kommt.

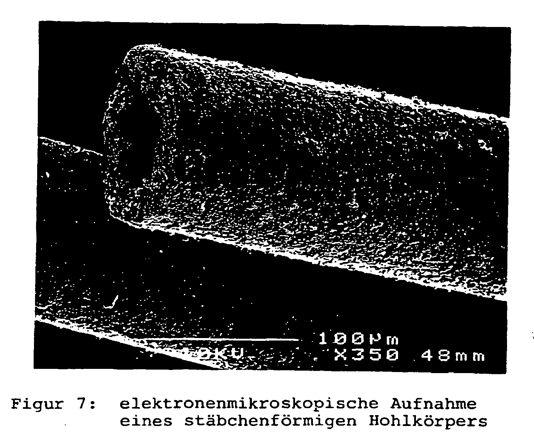

Die Figuren 1 bis 7, die im folgenden erklärt werden, zeigen einige besondere Ausführungsformen der erfindungsgemäßen Formkörper und sollen lediglich der Veranschaulichung der vorliegenden Erfindung dienen, ohne dass darin irgendeine Einschränkung zu sehen ist. Während die Figuren 1 bis 6 besondere geometrische Ausführungsformen wiedergeben, soll anhand der Figur 7 der bevorzugte mikrokristalline Aufbau des erfindungsgemäßen Formkörpers demonstriert werden.
- Figur 1:: einen erfindungsgemäßen Formkörper in Gestalt eines stäbchenförmigen Vollkörpers
- Figur 2:: einen erfindungsgemäßen Formkörper in Gestalt eines stäbchenförmigen Hohlkörpers
- Figur 3:: einen erfindungsgemäßen Formkörper in Gestalt eines sternförmigen, flachen Hohlköpers
- Figur 4:: einen erfindungsgemäßen Formkörper in Gestalt eines sternförmigen Vollkörpers
- Figur 5:: einen erfindungsgemäßen Formkörper in Gestalt eines ringförmigen Hohlkörpers
- Figur 6:: einen erfindungsgemäßen Formkörper in Gestalt eines sechseckigen, flachen Hohlkörpers
- Figur 7:: eine elektronenmikroskopische Aufnahme eines erfindungsgemäßen Formkörpers in Gestalt eines stäbchenförmigen Hohlkörpers

Im folgenden soll die Erfindung anhand von Beispielen erläutert werden, ohne dass darin eine Einschränkung zu sehen ist.

### Beispiel 1

Ein α-Aluminiumoxid, mit einer maximalen Teilchengröße d₉₉ von ca. 1 µm und einer mittleren Partikelgröße d₅₀ von ca. 0.5 µm, das durch Naßvermahlung und anschließende Sprühtrocknung aus einem gröberen α-Al₂O₃-Pulver gewonnen wurde, wurde mit Methylcellulose, Polyäthylenglykol, Ölsäure und Glycerin, als Binderadditive, und Wasser, als Lösungsmittel, vermischt und in einem Kneter zu einer extrudierbaren Masse aufbereitet und anschließend in einem Kolbenextruder bei einem mittleren Druck von ca. 150 bar extrudiert. Das Mundstück des Extruders bestand aus einer Lochscheibe mit einem Lochdurchmesser von ca. 1,3 mm.

Die extrudierten Stränge wurden unmittelbar hinter der Austrittsöffnung mit einem rotierenden Messer in der für den Formkörper gewünschten Länge geschnitten. Die Sinterung der Grünkörper wurde in einem Durchschubofen bei 1480 °C unter Luft durchgeführt. Die Sinterzeit betrug ca. 1 Stunde. Die so erhaltenen gesinterten, mikrokristallinen Formkörper besaßen eine Härte HV_{0,2} von 19 GPa, eine mittlere Kristallitgröße von 0.6 µm und die Dichte betrug 97.5% der theoretischen Dichte.

Der mittlere Durchmesser des Stäbchens lag bei ca. 1 mm und das Verhältnis Durchmesser / Länge lag zwischen 1 / 2 und 1 /4.

### Beispiel 2

Die Herstellung der Formkörper erfolgte analog zu Beispiel 1. Anstelle der Ölsäure wurde als Binderkomponente Ammoniumpolyacrylat eingesetzt. Die Sinterung wurde anstatt im Durchschubofen in einem Drehrohrofen bei 1475°C durchgeführt. Die Sinterzeit betrug ca. 30 Minuten. Die Zerkleinerung des Extrudats erfolgte ohne Zwischenschritt in einer Schneidmühle.

Die so erhaltenen gesinterten, mikrokristallinen Formkörper besaßen eine Härte HV_{0.2} von 20,2 GPa, eine mittlere Kristallitgröße von 0.5 µm und die Dichte erreichte 98,6 %, der theoretischen Dichte.

### Beispiel 3

Die Herstellung der Formkörper erfolgte analog zu Beispiel 1.

Nach der Sinterung wurden die beim Herstellungsprozeß erzeugten stäbchenförmigen Formkörper mit einer Mischung aus Wasserglas, Glasmehl und Eisenoxid-Pigment sorgfältig vermischt, bis die Oberfläche mit einem gleichmäßigen Überzug des Pigments versehen war. Anschließend wurde die so ummantelte Schleifkörnung bei 900 °C in einem Drehrohrofen gebrannt, um die Bindung des Pigments an der Oberfläche des Schleifkorn-Stäbchens zu verfestigen.

### Beispiel 4

Die Herstellung einer extrudierbaren Masse und die Extrusion erfolgte wie in Beispiel 1 ausführlich beschrieben wurde. Anstelle der einfachen Lochscheibe wurde ein Mundstück mit ringförmigen Öffnungen eingesetzt. Der Außendurchmesser des Ringes betrug 5.2 mm, der Innendurchmesser des Ringes 3.4 mm.

Die extrudierten Hohlstränge wurden nach der Austrittsöffnung auf ein Förderband gelegt und mit einem Querschneider auf die gewünschte Länge geschnitten. Die auf diese Weise hergestellten röhrchenförmigen Grünkörper wurden mit einer Aufheizrate von ca. 100 °C pro Stunde auf 800 °C geheizt, um die Binderkomponenten und das Lösungsmittel zu entfernen. Die auf diese Weise getrockneten Grünkörper wurden anschließen in einem Durchschubofen bei 1480 °C gesintert.

Die so erhaltenen gesinterten, mikrokristallinen Formkörper besaßen eine Härte HV_{0.2} von 20.4 GPa, eine mittlere Kristallitgröße von 0,6 µm und einen Dichtewert von 98 %, der theoretischen Dichte.

Der Außendurchmesser des gesinterten, mikrokristallinen Formkörpers lag bei ca. 4 mm und die Wandstärke des Röhrchens betrug ca. 0.75 mm, so dass sich ein Innendurchmesser von ca. 2.5 mm ergab. Das Verhältnis von Länge zu Außendurchmesser lag zwischen 1 / 1 und 2 / 1.

### Beispiel 5

Die Grünkörpererzeugung erfolgte in der in Beispiel 4 beschriebenen Art.

Die Hohlstränge wurden jedoch so geschnitten, dass flachere Formkörper erhalten wurden mit einem Verhältnis von Länge zu Durchmesser von 1 / 4. Die so erhaltenen Formkörper wurden unmittelbar im Anschluß an den Schneidvorgang 1 Stunde lang bei 1440 °C gesintert.

Die gesinterten, mikrokristallinen Formkörper besaßen eine Härte HV_{0.2} von 16.7 GPa, eine mittlere Kristallitgröße von 0.5 µm und 96.4 % der theoretischen Dichte.

### Beispiel 6

Die Herstellung der extrudierbaren Masse und deren Extrusion entsprach der in Beispiel 1 beschriebenen Vorgehensweise. Anstelle der Lochblende wurde ein Mundstück mit einer Öffnung in Form eines sternförmigen Ringes verwendet. Der mittlere Außendurchmesser des Ringes betrug 5 mm und der Innendurchmesser 3 mm.

Die auf diese Weise erzeugten Hohlstränge wurden mit einem Querschneider auf ein Längen/Außendurchmesser-Verhältnis von 1 / 4 geschnitten und unmittelbar im Anschluß im Durchschubofen bei 1480 °C gesintert.

Die gesinterten, mikrokristallinen Formkörper besaßen eine Härte HV_{0.2} von 20.2 GPa, eine mittlere Kristallitgröße von 0.6 µm und eine Dichte von 97.8 % der theoretische Dichte.

### Beispiel 7

### Schleiftests 1 (Schleifscheiben)

Die Formkörper aus Beispiel 1 bis 4 wurden in kunstharzgebundenen Schleifscheiben zur Bearbeitung von Kohlenstoffstahl eingesetzt und mit den Schleifeigenschaften von kommerziell erhältlichem 25 %-igem Zirkonkorund und stäbchenförmigem Sinterkorund auf Bauxitbasis verglichen. Die Schleifzeit betrug 15 Minuten. Die Vegleichskörnungen wurden in der Korngröße F20 eingesetzt.

**Tabelle 1: Schleifergebnisse Scheibentest (HP-Scheiben)**

| | | | |
|---|---|---|---|
| Korntyp | Gesamtabtrag (kg) | G-Faktor | Leistung (%) |
| | | | |
| Beispiel 1 | 89 | 111,3 | 133 |
| Beispiel 2 | 86 | 107,5 | 128 |
| Beispiel 3 | 96 | 137,1 | 143 |
| Beispiel 4 | 107 | 178,3 | 159 |
| Vergleichsbeispiel 1 (Zirkonkorund 25 %) | 67 | 75,6 | 100 |
| Vergleichsbeispiel 2 (Sinter-Korund auf Bauxitbasis) | 44 | 36,6 | 66 |

### Beispiel 8

### Schleiftest 2 (Schleifband)

Für den Bandtest wurden die gemäß Beispiel 5 und 6 hergestellten Formkörper eingesetzt. Als Referenzkorn wurde handelsüblicher Zirkonkorund und Sol-Gel-Korund herangezogen. Die Schleifkörner nach Beispiel 5 und 6 wurden mechanisch auf das Band gebracht, während die Vergleichskörner elektrostatisch gestreut wurden. Die Vergleichsmaterialien wurden in der Korngröße P24 eingesetzt, die mit einem mittleren Partikeldurchmesser von ca. 0.75 mm eine dem Durchmesser des äußeren Ringes des Formkörpers vergleichbare Größenordnung aufwies. Bearbeitet wurde Turbinenstahl. Die Schleifzeit betrug 30 Minuten. Die Schleifergebnisse sind in der Tabelle 2 zusammengefasst, wobei anzumerken ist, dass neben der verbesserten Abtragsleistung mit den erfindungsgemäßen Schleifkörner auch ein deutlich besseres Schliffbild (Oberflächengüte) erzielt werden konnte.

**Tabelle 2: Schleiftests (Bandschleifen)**

| | | |
|---|---|---|
| Korntyp | Abtrag (g) | Leistung (%) |
| Beispiel 5 | 1438 | 168 % |
| Beispiel 6 | 1535 | 179 % |
| Sol-Gel-Korund | 856 | 100 % |
| Zirkonkorund | 472 | 55 % |

## Patentansprüche

1. Verfahren zur Herstellung gesinterter, mikrokristalliner Schleifkörner auf Basis von α-Al₂O₃ mit einer Härte HV_{0,2} von ≥ 15 GPa, einer Dichte ≥ 95 % der theoretischen Dichte, einer mittleren Primärkristallgröße < 2 µm und einem Al₂O₃₋Gehalt von mindestens 98 Gew.-%,
**dadurch gekennzeichnet, dass** als Ausgangsmaterial ein α-Al₂O₃-Pulver mit einem mittleren Teilchendurchmesser < 2 µm verwendet wird, dass das Ausgangsmaterial mit mindestens einem Binder und einem Lösungsmittel zu einer Mischung vermischt wird, dass die Mischung zu einer extrudierbaren Masse verarbeitet wird, dass die extrudierbare Masse zu einem Extrudat extrudiert wird, dass das Extrudat zu Formkörpern weiterverarbeitet wird, dass die Formkörper in einem Temperaturbereich zwischen 1300 °C und 1750 °C gesintert werden.

2. Verfahren nach Anspruch 1,
**dadurch gekennzeichnet, dass** das Ausgangsmaterial durch eine Naßvermahlung aus einem gröberen Vorstoff auf Basis von Al₂O₃ hergestellt wird.

3. Verfahren nach Anspruch 2,
**dadurch gekennzeichnet, dass** für die Naßvermahlung Attritoren, Kugelmühlen oder Vibrationsmühlen eingesetzt werden.

4. Verfahren nach einem oder mehreren der Ansprüche 1 bis 3,
**dadurch gekennzeichnet, dass** als Binder für die extrudierbare Masse Methylcellulose, Polyvinylbutyral, emulgiertes Acrylat, Polyvinylalkohol, Polyvinylpyrro, lidon, polyacrylate Stärke, silikatische Binder und/oder. Ligninsulfonat eingesetzt wird.

5. Verfahren nach einem oder mehreren der Ansprüche 1 bis 4,
**dadurch gekennzeichnet, dass** der Mischung aus Binder, Ausgangsmaterial und Lösungsmittel einer oder mehrere der zusätzlichen Hilfsstoffe aus der Gruppe Dispergierhilfen, Gleitmittel und/oder Weichmacher zugesetzt werden.

6. Verfahren nach Anspruch 5,
**dadurch gekennzeichnet, dass** als Dispergierhilfe einer oder mehrere Stoffe aus der Gruppe Amnoniumpolyacrylat, Natriumsilikat, Manhattan Fischöl, Polyäthylenimin, Natrium-Ligninsulfonat und Alginat ausgewählt werden.

7. Verfahren nach einem der Ansprüche 5 oder 6,
**dadurch gekennzeichnet, dass** als Gleitmittel einer oder mehrere Stoffe aus der Gruppe Ammoniumstearat, Wachs-Emulsion Ölsäure, Manhattan Fischöl, Stearinsäure, Palmitinsäure, Linolsäure, Myristinsäure und/oder Laurinsäure ausgewählt werden.

8. Verfahren nach einem der Ansprüche 5 bis 7,
**dadurch gekennzeichnet, dass** als Weichmacher einer oder mehrere Stoffe aus der Gruppe Glyzerin, Polyäthylenglykol, Octylphthalat und Äthylenglykol ausgewählt werden.

9. Verfahren nach einem oder mehreren der Ansprüche 1 bis 8,
**dadurch gekennzeichnet, dass** als Lösungsmittel ein anorganisches oder organisches Lösungsmittel aus der Gruppe Wasser, Äthanol, Toluol, Benzol, Isopropanol, Aceton, Xylen, Kohlenwasserstoffe, wie Hexan, Heptan, Octan, Nonan und chlorierte Kohlenwasserstoffe, wie Trichloräthan, Tetrachlorkohlenstoff, Trichlormethan und Methylenchlorid eingesetzt wird.

10. Verfahren nach einem oder mehreren der Ansprüche 1 bis 9,
**dadurch gekennzeichnet, dass** die extrudierbare Masse in einem Kneter mit Austragsschnecke, einem Einschneckenextruder, einem Compounder, einem Expansionsextruder, einem Doppelschneckenextruder, einer Kolbenpresse oder einem Planetenextruder extrudiert wird.

11. Verfahren nach einem oder mehreren der Ansprüche 1 bis 10,
**dadurch gekennzeichnet, dass** die zu extrudierende Masse vor dem Extrudieren entlüftet wird.

12. Verfahren nach einem oder mehreren der Ansprüche 1 bis 11,
**dadurch gekennzeichnet, dass** die Extrudate auf einen Feuchtigkeitsgehalt von <20 Gew.-% zu Grünkörpern getrocknet werden.

13. Verfahren nach einem oder mehreren der Ansprüche 1 bis 12,
**dadurch gekennzeichnet, dass** die Grünkörper vor dem Zerkleinern in einem Temperaturbereich zwischen 150° und 800°C kalziniert werden.

14. Verfahren nach einem oder mehreren der Ansprüche 1 bis 13,
**dadurch gekennzeichnet, dass** die Extrudate oder die Grünkörper mit Hilfe einer Granuliereinheit auf eine vorgegebene Länge zu einem Granulat zerkleinert werden.

15. Verfahren nach Anspruch 14,
**dadurch gekennzeichnet, dass** als Granuliereinheit rotierende Messer, Quer-, Strang- oder Längsschneider eingesetzt werden.

16. Verfahren nach einem der Ansprüche 1 bis 15,
**dadurch gekennzeichnet, dass** die Extrudate, die Grünkörper oder das Granulat mit Hilfe eines Zerkleinerungsaggregats zu Formkörpern zerkleinert werden.

17. Verfahren nach Anspruch 16,
**dadurch gekennzeichnet, dass** als Zerkleinerungsaggregat konventionelle Zerkleinerungsaggregate aus der Gruppe Schneidmühlen, Schlägermühlen und Walzen eingesetzt werden.

18. Verfahren nach einem oder mehreren der Ansprüche 1 bis 17,
**dadurch gekennzeichnet, dass** die Formkörper bei Temperaturen unterhalb von 1500 °C gesintert werden.

19. Gesintertes, mikrokristallines Schleifkorn auf Basis von α-Al₂O₃ mit einer Härte HV_{0,2} von ≥ 15 GPa, einer Dichte ≥ 95 % der theoretischen Dichte, einer mittleren Primärkristallgröße < 2 µm und einem Al₂O₃-Gehalt von mindestens 98 Gew.%, hergestellt nach einem Verfahren gemäß einem oder mehreren der Ansprüche 1 bis 17,
**dadurch gekennzeichnet, dass** das Schleifkorn ein vollkörper oder ein Hohlkörper in Form eines Stäbchens, eines Zylinders, eines Mehrecks, eines Sterns, eines Stäbchens mit wellenförmiger Oberfläche ist.

20. Schleifkorn nach Anspruch 19,
**dadurch gekennzeichnet, dass** die mittlere Primärkristallgröße unter 1 µm liegt.

21. Schleifkorn nach einem oder mehreren der Ansprüche 19 oder 20,
**dadurch gekennzeichnet, dass** der Durchmesser des Formkörpers nicht mehr als 6 mm aufweist, wenn es sich um einen Vollkörper handelt.

22. Schleifkorn nach einem oder mehreren der Ansprüche 19 oder 20,
**dadurch gekennzeichnet, dass** der Durchmesser des Formkörpers nicht mehr als 12 mm beträgt, wenn es sich um einen Hohlkörper handelt.

23. Schleifkorn nach Anspruch 22,
**dadurch gekennzeichnet, dass** die Wandstärke des Hohlkörpers zwischen 0.01 und 2 mm liegt.

24. Schleifkorn nach einem oder mehreren der Ansprüche 19 bis 23,
**dadurch gekennzeichnet, dass** das Verhältnis von Durchmesser zur Länge zwischen 0.1 / 1 und 20 /1 liegt.

25. Schleifkorn nach einem der Ansprüche 19 bis 23,
**dadurch gekennzeichnet, dass** das Verhältnis von Durchmesser zur Länge zwischen 0.2 / 1 und 1 / 1 liegt.

26. Schleifkorn nach einem der Ansprüche 19 bis 23,
**dadurch gekennzeichnet, dass** das Verhältnis von Durchmesser zur Länge zwischen 1 / 1 und 10 / 1 liegt.

27. Verwendung des schleifkorns nach einem oder mehreren der Ansprüche 18 bis 26 als Schleifkorn für Schleifmittel.

28. Verwendung des Schleifkorns nach Anspruch 24 oder 25 als Schleifkorn für Schleifmittel auf Unterlage.

29. Verwendung des Schleifkorns nach Anspruch 24 oder 26 als Schleifkorn in gebundenen Schleifmitteln.

30. Verwendung des Schleifkorns nach einem der Ansprüche 27 bis 29,
**dadurch gekennzeichnet, dass** die Oberfläche des Formkörpers zusätzlich behandelt wurde, um die Einbindung des Formkörpers im Schleifmittel zu verbessern.

## Claims

1. A method for the manufacture of sintered, microcrystalline α-Al₂O₃-based abrasive grains with a hardness HV_{0.2} of ≥ 15 GPa, a density ≥ 95 % of the theoretical density, a mean primary crystal size < 2 µm and an Al₂O₃ content of at least 98 % by weight,
**characterised in that** an α-Al₂O₃ powder having a mean particle size of < 2 µm is used as the starting material,
**in that** the starting material is mixed with at least one binder and one solvent to a mixture,
**in that** the mixture is processed to an extrudable mass,
**in that** the extrudable mass is extruded to an extrudate,
**in that** the extrudate is further processed to shaped bodies, **in that** the shaped bodies are sintered in a temperature range of between 1300° and 1750°C.

2. A method according to Claim 1,
**characterised in that** the starting material is manufactured by wet comminution from an Al₂O₃-based coarser preliminary material.

3. A method according to Claim 2,
**characterised in that** attritors, ball mills or vibratory mills are used for the wet comminution.

4. A method according to one or more of Claims 1 to 3,
**characterised in that** methyl cellulose, polyvinylbutyral, emulsified acrylate, polyvinyl alcohol, polyvinyl pyrrolidine, polyacrylate starch, silicate binders and/or lignosulphonate is used as the binder for the extrudable mass.

5. A method according to one or more of Claims 1 to 4,
**characterised in that** the mixture of binder, starting material and solvent are added to one or more of the additional auxiliary materials from the group comprising dispersing agents, sliding agents and/or plasticisers.

6. A method according to Claim 5,
**characterised in that** one or more substances are selected from the group comprising ammonium polyacrylate, sodium silicate, Manhattan fish oil, polyethylene imine, sodium lignosulphonate and alginate.

7. A method according to one of Claims 5 or 6,
**characterised in that** one or more substances from the group comprising ammonium stearate, wax emulsion oleic acid, Manhattan fish oil, stearic acid, palmitic acid, linoleic acid, myristic acid and/or lauric acid are selected as sliding agents.

8. A method according to one of Claims 5 to 7,
**characterised in that** one or more substances from the group comprising glycerine, polyethylene glycol, octylphthalate and ethylene glycol are selected as plasticisers.

9. A method according to one or more of Claims 1 to 8,
**characterised in that** an inorganic or organic solvent from the group comprising water, ethanol, toluene, benzene, isopropanol, acetone, xylene, hydrocarbons, such as hexane, heptane, octane, nonane and chlorinated hydrocarbons, such as trichloroethane, carbon tetrachloride, trichloromethane and methylene chloride are used as the solvent.

10. A method according to one or more of Claims 1 to 9,
**characterised in that** the extrudable mass is extruded in a kneader with a discharge screw, a single-screw extruder, a compounder, an expansion extruder, a twin-screw extruder, a ram press or a planetary extruder.

11. A method according to one or more of Claims 1 to 10,
**characterised in that** the mass to be extruded is deaerated prior to extrusion.

12. A method according to one or more of Claims 1 to 11,
**characterised in that** the extrudates are dried to a moisture content of < 20 % by weight to green bodies.

13. A method according to one or more of Claims 1 to 12,
**characterised in that** the green bodies are calcined prior to comminution in a temperature range of between 150° and 800 °C.

14. A method according to one or more of Claims 1 to 13,
**characterised in that** the extrudates or the green bodies are comminuted to a predetermined length to a granulate with the aid of a granulating unit.

15. A method according to Claim 14,
**characterised in that** rotating blades, cross cutters,
strand cutters or longitudinal cutters are used as the granulating unit.

16. A method according to one of Claims 1 to 15,
**characterised in that** the extrudates, the green bodies or the granulate are comminuted to shaped bodies with the aid of a comminution unit.

17. A method according to Claim 16,
**characterised in that** conventional comminution units from the group comprising cutting mills, beater mills and rollers are used as the comminution unit.

18. A method according to one or more of Claims 1 to 17,
**characterised in that** the shaped bodies are sintered at temperatures of below 1500 °C.

19. A sintered, microcrystalline, α-Al₂O₃-based abrasive grain having a hardness HV_{0.2} of ≥ 15 GPa, a density ≥ 95 % of the theoretical density, a mean primary crystal size < 2 µm and an Al₂O₃ content of at least 98 % by weight, manufactured in accordance with one or more of Claims 1 to 17,
**characterised in that** the abrasive grain is a solid body or a hollow body in the form of a little rod, a cylinder, a polygon, a star, a little rod with an undulating surface.

20. An abrasive grain according to Claim 19,
**characterised in that** the mean primary crystal size is under 1 µm.

21. An abrasive grain according to one or more of Claims 19 or 20,
**characterised in that** the diameter of the shaped body is not more than 6 mm if it is a solid body.

22. An abrasive grain according to one or more of Claims 19 or 20,
**characterised in that** the diameter of the shaped body is no more than 12 mm if it is a hollow body.

23. An abrasive grain according to Claim 22,
**characterised in that** the wall thickness of the hollow body is between 0.01 and 2 mm.

24. An abrasive grain according to one or more of Claims 19 to 23,
**characterised in that** the ratio of the diameter to the length is between 0.1/1 and 20/1.

25. An abrasive grain according to one of Claims 19 to 23,
**characterised in that** the ratio of the diameter to the length is between 0.2/1 and 1/1.

26. An abrasive grain according to one of Claims 19 to 23,
**characterised in that** the ratio of the diameter to the length is between 1/1 and 10/1.

27. Use of the abrasive grain according to one or more of Claims 18 to 26 as an abrasive grain for abrasives.

28. Use of the abrasive grain according to Claim 24 or 25 as an abrasive grain for abrasives on a backing.

29. Use of the abrasive grain according to Claim 24 or 26 as an abrasive grain in bound abrasives.

30. Use of the abrasive grain according to one of Claims 27 to 29,
**characterised in that** the surface of the shaped body was additionally treated in order to improve the binding of the shaped body in the abrasive.

## Revendications

1. Procédé de fabrication de grains abrasifs microcristallins frittés à base de Al₂O₃-α d'une dureté HV_{0.2} ≥ 15 GPa, d'une densité ≥ 95 % de la densité théorique, d'une taille moyenne de cristaux primaires < 2 µm et d'une teneur en Al₂O₃ d'au moins 98 % en poids,
**caractérisé en ce qu'**
on utilise comme matière de départ une poudre de Al₂O₃-α ayant un diamètre moyen de particule < 2 µm, on mélange la matière de départ à au moins un liant et un solvant pour former un mélange, on transforme le mélange en une masse extrudable que l'on extrude en un extrudat transformé en corps moulés, et on fritte les corps moulés dans une plage de température comprise entre 1300°C et 1750°C.

2. Procédé selon la revendication 1,
**caractérisé en ce que**
la matière de départ est fabriquée par broyage humide à partir d'une matière première plus grossière à base d'Al₂O₃.

3. Procédé selon la revendication 2.
**caractérisé en ce que**
pour le broyage humide, on utilise des attriteurs, des broyeurs à galets ou des broyeurs à vibrations.

4. Procédé selon l'une quelconque ou plusieurs des revendications 1 à 3,
**caractérisé en ce que**
comme liant pour la masse extrudable, on utilise de la méthylcellulose, du butyral polyvinylique, un acrylate émulsifié, de l'alcool polyvinylique. de la polyvinylpyrrolidone, de l'amidon polyacrylate, des liants silicatiques et/ou du sulfonate de lignine.

5. Procédé selon l'une quelconque ou plusieurs des revendications 1 à 4.
**caractérisé en ce qu'**
on ajoute au mélange constitué de liant, de matière de départ et de solvant, un ou plusieurs auxiliaires supplémentaires du groupe constitué d'auxiliaires de dispersion, d'agents de glissement et/ou de plastiflants.

6. Procédé selon la revendication 5.
**caractérisé en ce que**
comme auxiliaire de dispersion, on choisit une ou plusieurs substances du groupe constitué de polyacrylate d'ammonium, de silicate de sodium, d'huile de poisson de Manhattan, de polyéthylèneimine, de sulfonate de lignine sodique et d'alginate.

7. Procédé selon l'une quelconque des revendications 5 ou 6.
**caractérisé en ce que**
comme agent de glissement, on choisit une ou plusieurs des substances du groupe constitué de stéarate d'ammonium, d'émulsion de cire, d'acide oléique, d'huile de poisson de Manhattan, d'acide stéarique, d'acide palmitique, d'acide linolique, d'acide myristique et/ou d'acide laurique.

8. Procédé selon l'une quelconque des revendications 5 à 7,
**caractérisé en ce que**
comme plastifiant, on choisit une ou plusieurs substances du groupe constitué de glycérol, de polyéthylène glycol, de phtalate d'octyle et d'éthylène glycol.

9. Procédé selon l'une quelconque ou plusieurs des revendications 1 à 8,
**caractérisé en ce que**
comme solvant, on utilise un solvant inorganique ou organique du groupe constitué d'eau, d'éthanol, de toluène, de benzène, d'isopropanol, d'acétone, de xylène, d'hydrocarbures comme l'hexane, l'heptane, l'octane, le nonane et les hydrocarbures chlorés, comme le trichloréthane, le tétrachlorocarbone, le trichlorométhane et le chlorure de méthylène.

10. Procédé selon l'une quelconque ou plusieurs des revendications 1 à 9.
**caractérisé en ce qu'**
on extrude la masse extrudable dans un malaxeur comportant une vis de décharge, une extrudeuse à une vis, un compounder, une extrudeuse à expansion, une extrudeuse à deux vis, une presse à pistons ou une extrudeuse planétaire.

11. Procédé selon l'une quelconque ou plusieurs des revendications 1 à 10,
**caractérisé en ce qu'**
on désaère la masse à extruder avant l'extrusion.

12. Procédé selon l'une quelconque ou plusieurs des revendications 1 à 11,
**caractérisé en ce qu'**
on sèche les extrudats à une teneur en humidité < 20 % en poids pour obtenir des corps crus.

13. Procédé selon l'une quelconque ou plusieurs des revendications 1 à 12,
**caractérisé en ce qu'**
on calcine les corps crus, avant le broyage, dans une plage de température comprise entre 150 et 800°C.

14. Procédé selon l'une quelconque ou plusieurs des revendications 1 à 13,
**caractérisé en ce qu'**
on broie les extrudats ou les corps crus à l'aide d'une unité de granulation à la longueur prédéfinie pour former un granulat.

15. Procédé selon la revendication 14,
**caractérisé en ce que**
comme unité de granulation, on utilise des couteaux rotatifs, des découpeurs transversaux, en boudins ou longitudinaux.

16. Procédé selon l'une quelconque 1 à 15.
**caractérisé en ce qu'**
on broie les extrudats, les corps crus ou le granulat en corps moulés à l'aide d'un appareil de broyage.

17. Procédé selon la revendication 16,
**caractérisé en ce que**
comme appareil de broyage, on utilise des appareils de broyage conventionnels faisant partie du groupe constitué des broyeurs à couteaux, des broyeurs à marteaux et des cylindres.

18. Procédé selon l'une quelconque ou plusieurs des revendications 1 à 17,
**caractérisé en ce qu'**
on fritte les corps moulés à des températures inférieures à 1500°C.

19. Grain abrasif microcristallin fritté à base de α-Al₂O₃ d'une dureté HV_{0.2} ≥ 15 GPa, d'une densité ≥ 95 % de la densité théorique, d'une taille moyenne de cristaux primaires < 2 µm et d'une teneur en Al₂O₃ d'au moins 98 % en poids, fabriqué d'après un procédé selon l'une quelconque ou plusieurs des revendications 1 à 17,
**caractérisé en ce que**
le grain abrasif est un corps plein ou un corps creux en forme de bâtonnet, de cylindre, de polygone, d'étoile, de bâtonnet ayant une surface ondulée.

20. Grain abrasif selon la revendication 19,
**caractérisé en ce que**
la taille moyenne des cristaux primaires est inférieure à 1 µm.

21. Grain abrasif selon l'une quelconque ou plusieurs des revendications 19 ou 20,
**caractérisé en ce que**
le diamètre du corps moulé ne dépasse pas 6 mm lorsqu'il s'agit d'un corps plein.

22. Grain abrasif selon l'une quelconque ou plusieurs des revendications 19 ou 20.
**caractérisé en ce que**
le diamètre du corps moulé ne dépasse pas 12 mm lorsqu'il s'agit d'un corps creux.

23. Grain abrasif selon la revendication 22,
**caractérisé en ce que**
la paroi du corps creux a une épaisseur comprise entre 0.01 et 2 mm.

24. Grain abrasif selon l'une quelconque ou plusieurs des revendications 19 à 23,
**caractérisé en ce que**
le rapport entre le diamètre et la longueur est compris entre 0,1 / 1 et 20/1.

25. Grain abrasif selon l'une quelconque des revendications 19 à 23.
**caractérisé en ce que**
le rapport entre le diamètre et la longueur est compris entre 0.2/1 et 1/1.

26. Grain abrasif selon l'une quelconque des revendications 19 à 23,
**caractérisé en ce que**
le rapport entre le diamètre et la longueur est compris entre 1/1 et 10/1.

27. Utilisation du grain abrasif selon l'une quelconque ou plusieurs des revendications 18 à 26, en tant que grain abrasif pour produits abrasifs.

28. Utilisation du grain abrasif selon la revendication 24 ou 25, en tant que grain abrasif pour produits abrasifs sur un support.

29. Utilisation du grain abrasif selon la revendication 24 ou 26, en tant que grain abrasif dans des produits abrasifs liés.

30. Utilisation du grain abrasif selon l'une quelconque des revendications 27 à 29,
**caractérisée en ce que**
la surface du corps moulé a été traitée en complément pour améliorer l'intégration du corps moulé dans le produit abrasif.
